# EUROPÄISCHE PATENTSCHRIFT

(11) **EP 0 416 369 B1**
(45) Veröffentlichungstag und Bekanntmachung des Hinweises auf die Patenterteilung: **21.06.1995**
(21) Anmeldenummer: 90116021.8
(22) Anmeldetag: 22.08.1990
(51) Int. Cl.: C08F 292/00, C08F 2/44, C09D 151/10, C09D 7/12, C08K 9/04

(54) **Polymerumhüllte plättchenförmige Substrate**
Polymer coated plate-like substrate
Substrat sous forme de plaquettes enrobé de polymère

(30) Priorität: 05.09.1989 DE 3929422
(43) Veröffentlichungstag der Anmeldung: 13.03.1991
(73) Patentinhaber: MERCK PATENT GmbH, D-64271 Darmstadt (DE)
(72) Erfinder: Prengel, Constanze, Dr., D-6108 Weiterstadt (DE); Franz, Klaus-Dieter, Dr., D-6233 Kelkheim (DE); Dietz, Johann, Dr., D-6057 Dietzenbach (DE)

(56) Entgegenhaltungen:
- EP-A- 0 142 784
- EP-A- 0 230 802
- DE-A- 3 627 329
- US-A- 3 799 799
- DATABASE WPIL, Accession Nr. 86-236304 [36], Derwent Publications Ltd, London, GB; & JP-A-61 166 814

## Beschreibung

Die Erfindung betrifft polymerumhüllte plättchenförmige Substrate, erhältlich durch Polymerisation eines organischen Monomersystems, welches durch organische Kupplungsreagenzien oberflächenmodifizierte plättchenförmige Substrate enthält.

Plättchenförmige Substrate, d.h. Materialien mit einer im Vergleich zu Länge und Breite relativ geringen Dicke, werden in vielen Bereichen der Technik eingesetzt. So werden z.B. plättchenförmige Mineralien, wie z.B. Kaolin, Glimmer oder Talk, in feinteiliger Form als Füller für Kunststoffe eingesetzt. Plättchenförmige Pigmente, wie z.B. mit Metalloxiden beschichtete Glimmerplättchen oder plättchenförmiges Eisenoxid oder Wismutoxychlorid, finden sowohl zur Pigmentierung von z.B. Lacken, Farben, Kunststoffen und dergleichen als auch in kosmetischen Zubereitungen Verwendung.

Die immer größer werdende Einsetzbarkeit plättchenförmiger Substrate in unterschiedlichen technischen Bereichen erfordert zunehmend die Entwicklung oberflächenmodifizierter Substrate, um letztlich die Verträglichkeit der Substrate mit weiteren Komponenten innerhalb technischer Zusammensetzungen zu gewährleisten.

Ein grundsätzliches Problem ist die starke Neigung von solchen plättchenförmigen Substraten zur Bildung von Agglomeraten, in denen die Substrate stapelförmig und kartenhausähnlich aufeinander liegen und aufgrund von starker Adhäsion nur schwer wieder zu separieren sind. Dies ist um so schwerwiegender als bei der Einarbeitung von plättchenförmigen Substraten in Zubereitungen wegen der leichten Zerstörbarkeit der dünnen Substrate keine hohen Scherkräfte ausgeübt werden dürfen.

So wurden unter anderem zahlreiche Methoden entwickelt, um das Problem der Einarbeitung von plättchenförmigen Pigmenten insbesondere in thermoplastische Kunststoffe zu lösen (DE-OS 26 03 211, DE-OS 32 21 044, DE-OS 36 27 329).

Weiterhin sind Beschichtungen mit Polysiloxanen zur verbesserten Witterungsbeständigkeit (DE 33 34 598) oder Silikonen (EP 0 224 978) bekannt. Die Verfahren sind jedoch teilweise zu aufwendig oder die beschichteten Pigmente sind nur begrenzt einsetzbar.

In EP 0,306,056 und EP 0,268,918 wird die Behandlung von plättchenförmigen Substraten mit Kupplungsreagenzien wie Organotitanaten zur verbesserten Dispergierbarkeit in kosmetischen Zubereitungen und Organosilanen zur verbesserten "water restistance" beschrieben.

In US 3,799,799 wird ein Verfahren zur Herstellung polymerumhüllter Mica-Substrate beschrieben, wobei zu einer wäßrigen Suspension der Mica-Partikel ein als Adhäsions-Promotor dienendes organosubstituiertes Silan, die reaktionsfähige Monomerkomponente sowie ein Polymerisationsinitiator zugegeben wird, und die Polymerisationsreaktion unter heftigem Rühren der Suspension abläuft. Die nach diesem Verfahren hergestellen Partikel weisen jedoch nicht in allen Fällen kompakte und gleichmäßige Polymerhüllen auf, und in 'molding powders', enthaltend derartige polymerumhüllte Partikel, tritt bei hohen Partikelgehalten Agglomeration auf. In EP 0,142,784 werden nach einem ähnlichen Verfahren nichtplättchenförmige Substrate polymerverkapselt, wobei jedoch die Aufbringung des Vinylsilans und die Zugabe der (Meth)acrylatmonomeren mit nachfolgender Polymerisation voneinander getrennt vorgenommen werden.

Aufgabe der vorliegenden Erfindung war es, verbesserte Verfahren zur Polymerbeschichtung von plättchenförmigen Substraten aufzufinden. Insbesondere sollten die Substrate kompatibel für die verschiedensten technischen Formulierungen sein ohne dabei die typischen Eigenschaften plättchenförmiger Substrate einzubüßen. Es besteht unter anderem ein Bedürfnis nach plättchenförmigen, oberflächenmodifizierten Pigmenten, die ohne Verlust ihrer Pigmenteigenschaften in Formulierungen eingearbeitet werden können. Häufig dabei auftretende Nachteile sind etwa der Pigmentschock, d.h. Agglomeratbildung bei der Einarbeitung aufgrund von Unverträglichkeiten oder etwa Pigmentmigration.

Diese Aufgabe wurde durch die vorliegende Erfindung gelöst. Es wurde nämlich gefunden, daß sich plättchenförmige Substrate in hervorragender Weise mit Polymersystemen umhüllen lassen, wenn sie vorher mit organischen Kupplungsreagenzien behandelt worden sind, wobei die Polymerverkapselung durch eine Emulsionspolymerisationsreaktion erfolgt.

Gegenstand der Erfindung sind somit polymerumhüllte plättchenförmige Substrate, wobei die Substrate Schichtsilikate, plättchenförmiges Eisenoxid, Wismutoxychlorid, Perlglanzpigmente, Metallplättchen oder oxidbeschichtete Aluminiumplättchen sind, die gegebenenfalls auch mit organischen Farbstoffen bzw. Pigmenten beschichtet sein können, welche erhältlich sind durch
(i) Aufbringen ein oder mehrerer organischer Kupplungsreagenzien auf das plättchenförmige Substrat, wobei die Kupplungsreagenzien ein oder mehrere Metallzentren enthalten, an die funktionelle organische Gruppen gebunden sind, zu Hydrophobierung des plättchenförmigen Substrates,
(ii) Suspendieren des erhaltenen oberflächenmodifizierten Substrates in einem wäßrigen Medium unter Zugabe eines oder mehrerer Emulgatoren, wodurch micellenähnliche Strukturen gebildet werden, die die plättchenförmigen Substrate umschließen,
(iii)Zugabe eines polymerisierbaren Monomersystems und gegebenenfalls eines Initiators mit nachfolgender Polymerisation, und
(iv) Abfiltrieren, Waschen und Trocknen.

Gegenstand der Erfindung sind weiter Latexsysteme, enthaltend polymerumhüllte plättchenförmige Substrate, wobei die Substrate Schichtsilikate, plättchenförmiges Eisenoxid, Wismutoxychlorid, Perlglanzpigmente, Metallplättchen oder oxidbeschichtete Aluminiumplättchen sind, die gegebenenfalls auch mit organischen Farbstoffen bzw. Pigmenten beschichtet sind, welche erhältlich sind durch
(i) Aufbringen ein oder mehrerer organischer Kupplungsreagenzien auf das plättchenförmige Substrat, wobei die Kupplungsreagenzien ein oder mehrere Metallzentren enthalten, an die funktionelle organische Gruppen gebunden sind, zur Hydrophobierung des plättchenförmigen Substrates,
(ii) Suspendieren des erhaltenen oberflächenmodifizierten Substrates in einem wäßrigen Medium unter Zugabe eines oder mehrerer Emulgatoren, wodurch micellenähnliche Strukturen gebildet werden, die die plättchenförmigen Substrate umschließen, und
(iii)Zugabe eines polymerisierbaren Monomersystems und gegebenenfalls eines Initiators mit nachfolgender Polymerisation.

Gegenstand der Erfindung ist weiter die Verwendung der erfindungsgemäßen polymerumhüllten plättchenförmigen Substrate oder der Latexsysteme in Formulierungen wie Lacken, Kunststoffen, Kosmetika oder Farbstoffen.

Weiterhin betrifft die Erfindung auch Formulierungen wie Farbstoffe, Lacke, Kunststoffe oder Kosmetika, enthaltend die erfindungsgemäßen polymerumhüllten plättchenförmigen Substrate oder Latexsysteme, sowie weiter auch ein Verfahren zur Herstellung plättchenförmiger Substrate, welche ausgewählt werden aus einer Gruppe von Substratmaterialien, welche Schichtsilikate, plättchenförmige Metalloxide, Wismutoxychlorid, Perlglanzpigmente, Metallplättchen und oxidbeschichtete Aluminiumplättchen umfaßt, die gegebenenfalls auch mit organischen Farbstoffen oder Pigmenten beschichtet sein können,zunächst durch Aufbringen eines oder mehrerer organischer Kupplungsreagenzien auf das plättchenförmige Substrat hydrophobiert werden, wobei die Kupplungsreagenzien ein oder mehrere Metallzentren enthalten, an die funktionelle organische Gruppen gebunden sind, daß das so erhaltene öberflächenmodifizierte Substrat dann in einem wäßrigen Medium unter Zugabe eines oder mehrerer Emulgatoren suspendiert wird, wodurch micellähnliche Strukturen gebildet werden, die die plättchenförmigen Substrate umschließen, daß dann ein polymerisierbares Monomersystem und gegebenenfalls ein Initiator zugegeben wird mit nachfolgender Polymerisation, und daS die polymerumhüllten plättchenförmigen Substrate anschließend gegebenenfalls abfiltriert, gewaschen und getrocknet werden.

Bevorzugte plättchenförmige Substrate zur erfindungsgemäßen Oberflächenmodifikation sind insbesondere Schichtsilikate und Oxide oder mit Oxiden beschichtete Materialien, da sie an der Oberfläche reaktive OH-Gruppen besitzen. Beispiele sind hierfür einerseits Glimmer, Talkum, Kaolin oder andere vergleichbare Mineralien, andererseits auch plättchenförmiges Eisenoxid, Wismutoxychlorid und die als Perlglanzpigmente bekannten metalloxidbeschichteten Glimmer, sowie Aluminiumplättchen und oxidbeschichtete Aluminiumplättchen. Es können alle üblichen Perlglanzpigmente verwendet werden, z.B. Glimmerbeschichtungen mit farbigen oder farblosen Metalloxiden, wie TiO₂, Fe₂O₃, SnO₂, Cr₂O₃, ZnO und anderen Metalloxiden, allein oder in Mischung in einer einheitlichen Schicht oder in aufeinanderfolgenden Schichten. Diese Pigmente sind z.B. aus den deutschen Patenten und Patentanmeldungen 14 67 468, 19 59 998, 20 09 566, 22 14 545, 22 15 191, 22 44 298, 23 13 331, 25 22 572, 31 37 808, 31 37 809, 31 51 343, 31 51 354, 31 51 355, 32 11 602 und 32 35 017 bekannt. Weiterhin können die genannten plättchenförmigen Substrate auch mit organischen Farbstoffen bzw. Pigmentmolekülen beschichtet sein.

Als Kupplungsreagenzien, können entsprechende Verbindungen eingesetzt werden, wie sie beispielsweise in folgenden Publikationen beschrieben sind:

Edwin P. Plueddemann; Silane Coupling Agents; Plenum Press; New York, London (1982) und dort zitierte Literatur. Salvatore J. Monte, Gerald Sugerman; Ken-React Reference Manual - Titanate, Zirconate and Aluminate Coupling Agents (1987) und dort zitierte Literatur. Dynasilan Haftvermittler, Organofunktionelle Silane, Technische Information Dynamit Nobel (1985). Lawrence B. Cohen, The Chemistry of Zirconaluminate Coupling Agents and their Application in High Solids Coatings, Water-borne and Higher-Solids Coatings Symposium, New Orleans, 1986. Lawrence B. Cohen, Corrosion Reduction in High Solids and Water-borne Coatings using Zirconaluminate Adhesion Promoters, Water-borne and Higher-Solids Coatings Symposium, New Orleans, 1988. Peter Z. Moles, The Application of Zirconium Compounds in Surface Coatings, Water-borne and Higher-Solids Coatings Symposium, New Orleans, 1987.

Geeignete Verbindungen enthalten in der Regel ein oder mehrere Metallzentren wie Si, Ti, Zr oder Al, an die funktionelle organische Gruppen gebunden sind. Von den Silanen sind beispielsweise die kommerziell (Fa. Dynamit Nobel) erhältlichen DYNASYLAN®-Reagenzien geeignet. Es sind dies Alkoxysilanderivate mit zwei oder drei Alkoxyresten und ein bzw. zwei Alkylresten, an die auch zusätzlich funktionelle Gruppen gebunden sein können, beispielsweise Amino-, Mercapto-Methacryloxy- oder eine Nitrilgruppe oder ein Halogenrest wie Chlor. Geeignete Titanatkupplungsreagenzien sind beispielsweise die kommerziell (Fa. Kenrich Petrochemicals, Inc.) erhältlichen "KR"- oder "LICA"-Substanzen. Ähnlich zu den oben erwähnten Silanen sind diese Reagenzien Verbindungen mit Alkoxyresten und gegebenenfalls zusätzlich durch funktionelle Gruppen substituierte Reste, die über Sauerstoff an das Metallzentrum gebunden sind. Die funktionellen Gruppen sind beispielsweise Amino-, Mercapto- oder Hydroxylgruppen.

Geeignete Zirkonat-Kupplungsreagenzien sind beispielsweise die als "KZ"- oder "LZ"-Reagenzien bei Kenrich Petrochemicals, Inc. erhältlichen Verbindungen, gegebenenfalls mit Amino- oder Mercaptogruppen. Weiterhin können zur Herstellung der erfindungsgemäßen Substrate Zirkoniumaluminate, wie beispielsweise die bei Cavedon Chemical Co., Inc. erhältlichen entsprechenden "Cavco Mod"-Reagenzien eingesetzt werden. Für erfindungsgemäße Polymerumhüllungen mit Zirkoniumaluminaten als Kupplungsreagenzien sind insbesondere auch plättchenförmige Metallsubstrate geeignet, beispielsweise Al-, Cu-, Zn-Plättchen oder auch Legierungen.

Die Kupplungsreagenzien werden entweder direkt oder durch intensives Mischen von Substrat und Kupplungsreagens, vorzugsweise jedoch in organischen Lösungsmitteln oder im wäßrigen Medium aufgebracht. Die Konzentration des Kupplungsreagens liegt dabei im Bereich von etwa 0,01 bis 20, vorzugsweise bei 0,1 bis 10 Gew%. Darüberhinaus lassen sich auch Mischungen von Kupplungsreagenzien einsetzen.

Die auf diese Weise oberflächenmodifizierten plättchenförmigen Substrate zeichnen sich durch eine Reihe von Vorteilen gegenüber unbehandelten Substraten aus.

Beispielsweise zeigen mit Silanen wie Aminoalkylalkoxysilanen oder 3-Glycidyloxypropylsilan behandelte Perlglanzpigmente in Humidity- und Adhäsionstests durchweg bessere Ergebnisse als unbehandelte Pigmente.

Bevorzugte Titanat- und Zirkonatreagenzien sind die Monoalkoxytitanate (KR) wie KR TTS, KR 6, KR 7, KR 12, KR 26 S, KR 38 S und KR 44, die sogenannten Quat Titanate und Quat Zirkonate wie KR 138 D, KR 158 D, KR 238 T, KR 238 M, KR 238 A, KR 238 J, KR 262 A, LICA 38 J, LZ 38 J, die koordinierten Titanate und Zirkonate wie KR 41 B, KR 46 B, KR 55, KZ 55, die Neoalkoxytitanate wie LICA 01, LICA 09, LICA 12, LICA 38, LICA 44, LICA 97, LICA 99 und die Neoalkoxyzirkonate wie LZ 01, LZ 09, LZ 12, LZ 33, LZ 38, LZ 39, LZ 44, LZ 49, LZ 89 und LZ 97.

Die mit Quat Titanaten bzw. Zirkonaten behandelten Pigmente zeichnen sich durch teilweise sehr langes Absetzverhalten im Wasser aus. Dies wirkt sich beim Einarbeiten der Pigmente in Wasserlacken positiv aus. Neoalkoxyzirkonat-beschichtete Pigmente weisen teilweise erheblich geringere Photoaktivität auf als unbehandelte Pigmente.

Es können ferner auch Oxyacetat-Chelat-Titanate, A,B-Ethylen-Chelat-Titanate und Cycloheteroatom-Titanate und -Zirkonate verwendet werden.

Besonders bevorzugt sind die Quat Titanate und Quat Zirkonate, die koordinierten Titanate und Zirkonate sowie die Neoalkoxytitanate und -zirkonate.

Von den genannten Verbindungen sind KR TTS, KR 6, KR 7, KR 41 B und KR 55 zur Beschichtung von Pigmenten und anderen kosmetischem Material bekannt (EP 03 06 056).

Gegenstand der Erfindung sind damit auch Beschichtungen von plättchenförmigen Substraten mit allen anderen obengenannten Kupplungsreagenzien, insbesondere den Quat Titanaten und Quat Zirkonaten sowie koordinierten Zirkonaten und Neoalkoxyzirkonaten wegen der überraschenden und vorteilhaften Eigenschaften der beschichteten Substrate, beispielsweise der Pigmente.

Gegenstand der Erfindung sind insbesondere auch mit Zirkonaluminaten beschichtete plättchenförmige Substrate, wie beispielsweise Pigmente. Auch hier ist das Absitzverhalten der behandelten Pigmente im Wasser gegenüber den unbehandelten Pigmenten wesentlich verbessert. Insbesondere geeignet sind die oben erwähnten "Cavco Mod"-Reagenzien wie Cavco Mod APG, Cavco Mod CPG, Cavco Mod F, Cavco Mod C, Cavco Mod A, Cavco Mod CPM, Cavco Mod C-1PM, Cavco Mod M, Cavco Mod SPM, Cavco Mod APG-2, Cavco Mod MPM, Cavco Mod A PG-1 und Cavco Mod APG-3.

Die mit den genannten Kupplungsreagenzien beschichteten plättchenförmigen Substrate können vorteilhaft mit Polymersystemen umhüllt werden. Einerseits lassen sie sich problemlos aufgrund verbesserter Dispergierbarkeit in verschiedene Polymersysteme einarbeiten. Andererseits sind bei Verfahren wie der Emulsionspolymerisation stabile Latexsysteme herstellbar.

Das modifizierte plättchenförmige Substrat,beispielsweise ein Pigment, wird in einer wäßrigen Lösung, die einen Emulgator enthält, fein verteilt. Die Emulgatormoleküle lagern sich nun bevorzugt an den hydrophoben Pigmentteilchen so an, daß letztlich die hydrophilen Funktionen der Emulgatormoleküle in die wäßrige Phase zeigen. Es entstehen micellenartige Strukturen, die sich mit Monomer auffüllen, wenn die kritische Micellenkonzentration nicht oder nur geringfügig überschritten wird. Polymerisation findet dann, gegebenenfalls nach Zugabe eines Initiators, nahezu ausschließlich in den Pigmentmicellen statt. Die Menge des zuzusetzenden Monomers kann im Prinzip beliebig variiert werden. Aufgrund der sehr viel größeren Oberfläche der Micellen trifft ein in der wäßrigen Phase gebildetes Radikal sehr viel öfter auf eine mit Monomermolekülen gefüllte Micelle als ein in der Suspension schwimmendes Monomertröpfchen. Verbrauchte Monomere in der Micelle werden aus den Monomertröpfchen durch Diffusion nachgeliefert, so daß auch bei großer Monomerkonzentration Polymerisation praktisch nur im Micellenbereich abläuft. Die Monomermenge kann bis zu 100 Gew.% bezogen auf das Substratgewicht, in Einzelfällen jedoch wesentlich mehr betragen. (C.H.M. Caris et al., "Polymerization at the surface of inorganic submicron particles", XIX FATIPEX Kongreß, Aachen 1988). Basierend auf diesem Verfahrensprinzip lassen sich alle in Emulsion durchführbaren Polymerreaktionen, beispielsweise die Polymerisation und Copolymerisation von Acrylat, Methacrylat, Styrol, Vinylacetat, Butadien, Isopren, Acrylnitril, Vinylchlorid und dergleichen auf plättchenförmigen Substraten, die Initiatorgruppen tragen, ausführen. Die Reaktionsbedingungen sind dem Fachmann geläufig und können beispielsweise entnommen werden aus: D.B. Braun et al. in "Praktikum der makromolekularen organischen Chemie", Hüthig-Verlag, Heidelberg 1979. Das auf der Pigmentoberfläche entstandene Polymer kann entweder physikalisch gebunden vorliegen oder über eine kovalente Bindung an eine funktionelle Gruppe des Kupplungsreagenz, beispielsweise eine Methacrylatgruppe als Comonomereinheit, an die Pigmentoberfläche geknüpft sein.

Der Polymergehalt der erfindungsgemäßen Substrate läßt sich beispielweise durch die Wahl des Emulgators oder auch durch die Initiatormenge beeinflussen. Er läßt sich durch Pyrolyse der Produkte bestimmen. Als Emulgatoren können anionische, kationische und nichtionische Tenside verwendet werden. Geeignete Emulgatoren sind beispielweise Natriumdodecylsulfat (SDS), Natriumoleat, Silikonöl (z.B. MEK Art. 7742) und das als Tween 20 bekannte Polyoxyethylensorbitanmonolaurat (MEK Art. 822184). In Einzelfällen sind auch Gemische verschiedener Emulgatoren von Vorteil.

Eine Steigerung des Polymergehaltes durch Nachbeschichtung eines Ausgangspigments mit basischem Aluminiumsulfat wurde ebenfalls beobachtet.

Die auf diese Weise hergestellten polymerumhüllten Pigmente zeichnen sich durch deutlich verbesserte Einarbeitbarkeit in Polymersysteme aus sowie durch verbesserte Witterungsbeständigkeit. Glanzverlust und Agglomeratbildung ist praktisch nicht zu beobachten.

Darüberhinaus ist es nicht erforderlich, die einpolymerisierten Substratpartikel zu isolieren. Die bei der Emulsionspolymerisation als Pigmentlatices anfallenden Substrat-/Polymerpartikel können direkt mit den Komponenten eines Wasserlacksystems auf Latexbasis gemischt werden. Die Polymerbeschichtung der plättchenförmigen Substrate kann dabei durch geeignete Wahl der Monomeren auf das Lacksystem optimal abgestimmt werden. Durch das Mischen der abgestimmten Latices werden Unverträglichkeiten jeglicher Art sowie durch die Pigmentzugabe verursachte Störungen im Lacksystem (Pigmentschock) zum überwiegenden Teil oder sogar vollständig ausgeschlossen.

Zur Erläuterung der Erfindung dienen die folgenden Beispiele:

### Beispiel 1

### Beschichtungen mit Kupplungsreagenzien

A) 200 g Iriodin® 504 (mit Eisen(III)oxid beschichtetes Glimmerschuppenpigment der E. Merck, Darmstadt) werden in 4 l vollentsalztes (VE-)Wasser suspendiert. Die Reaktionssuspension wird dann unter kräftigem Rühren auf 75 °C aufgeheizt. Mit 15%iger Natronlauge wird pH 6,5 eingestellt. Anschließend läßt man innerhalb 10 Min eine Lösung von 2 g DYNASYLAN® 1110 in 200 ml VE-Wasser zur Pigmentsuspension tropfen. Dabei wird der pH-Wert mit 5%iger Natronlauge bei 6,5 gehalten. Nach beendeter Zugabe wird 30 Min bei 75 °C nachgerührt. Anschließend wird das Pigment über eine Filternutsche abgesaugt, 8x mit je 2 l VE-Wasser gewaschen und 16 h bei 100 °C getrocknet.
   Analog wird Iriodin® 225 (mit TiO₂ beschichtetes Glimmerschuppenpigment der E. Merck, Darmstadt) beschichtet, jedoch bei pH 8.
   Analog wird Iriodin® 225 mit DYNASYLAN® MEMO bei pH 5,5 beschichtet.
   Analog wird Iriodin® 504 mit DYNASYLAN® GLYMO bei pH 7 beschichtet.
   Alle beschichteten Pigmente zeigen im Humiditytest (16 h bei 66 °C im Einschicht-Humiditytestlack durchgeführt) und im Adhäsionstest (Gitterschnitttest nach DIN 53 151 mit einem Du Pont-Lacksystem durchweg deutlich bessere Ergebnisse als die unbehandelten Pigmente.
B) 61,5 g LICA 38 J werden in 4500 ml VE-Wasser gelöst und auf 30 °C erwärmt. Anschließend werden portionsweise 1500 g Iriodin® 504 in die Lösung gegeben. Nach beendeter Zugabe wird 30 Min nachgerührt. Anschließend wird das Pigment abfiltriert, 3x mit je 4500 ml VE-Wasser gewaschen und 16 h bei 120 °C getrocknet. Anstelle von VE-Wasser kann die Behandlung auch in Dichlormethan, Toluol oder Isopropanol erfolgen. Dann wird jedoch bei Raumtemperatur gearbeitet.
   Analog werden Beschichtungen mit KR 12, KR 138 D, KR 238 M, KR 238 J, KR 41 B, KR 46 B und LZ 38 auch jeweils an Iriodin® 225 durchgeführt. Die letzten drei genannten Titankuppler werden, in Toluol gelöst, eingesetzt.
   Die beschichteten Pigmente zeigen vergleichbare Humidity- und Adhäsionstestergebnisse wie unter A) beschrieben. Das mit LZ 38 beschichtete Pigment Iriodin® 225 weist deutlich geringere Photoaktivität (Kronos-Photoaktivitätstest) auf als unbehandeltes.
C) 100 g mit 1 Gew.% SiO₂ und 1,3 Gew.% Al(OH)SO₄ beschichtetes Iriodin® 504 werden in 2 l VE-Wasser suspendiert. Zur auf pH 4 eingestellten Reaktionssuspension wird dann innerhalb 30 Min. eine Lösung von 8,47 g Cavco Mod M 1 (= 2 % aktiver Komponente bzgl. 100 g Pigment) in 50 ml Isopropanol zugetropft. Nach beendetem Zutropfen wird eine Stunde nachgerührt. Anschließend wird das Pigment abfiltriert, 3x mit je 2 l VE-Wasser gewaschen und 16 h bei 105 °C getrocknet.
   Das mit Cavco Mod M 1 behandelte Pigment läßt sich bei gleicher Menge in einem Drittel der Zeit sieben, verglichen mit unbehandeltem Pigment oder handelsüblichem Iriodin® 504.
   Analog wird mit SiO₂ und Al(OH)SO₄ beschichtetes Iriodin® 504 gemäß der oben angegebenen Vorschrift mit den Zirkonaluminaten Cavco Mod APG, Cavco Mod CPG, Cavco Mod F, Cavco Mod C, Cavco Mod A, Cavco Mod CPM, Cavco Mod C-1PM, Cavco Mod M, Cavco Mod SPM, Cavco Mod APG-2, Cavco Mod MPM, Cavco Mod APG-1 und Cavco Mod APG-3 behandelt.
   Cavco Mod F und Cavco Mod SPM werden als Isopropanollösungen, alle anderen Zirkonaluminate als wäßrige Lösungen zugetropft.
   Die mit Zirkonaluminaten behandelten Pigmente sind durchweg hydrophob. In wäßriger Suspension liegen sie ausgesprochen fein verteilt vor und zwar ohne Agglomerate oder Aggregate zu bilden. Das Absitzverhalten der behandelten Pigmente in Wasser ist wesentlich langsamer als das unbehandelter Pigmente.
   Das in den folgenden Beispielen verwendete Wasser ist in allen Fällen vollentsalzt und unter Stickstoff ausgekocht.

### Beispiel 2

40 g mit einem Monoalkoxytitanat (KR 12) beschichtetes Iriodin® 225 werden in 250 ml Wasser suspendiert. Anschließend wird eine Lösung von 0,37 g Natriumdodecylsulfat (SDS) in 186 ml Wasser zugegeben. Die anfangs hydrophoben Pigmentteilchen sind jetzt hydrophil (Micellenbildung). Nach der Zugabe von 62 ml unter Stickstoff destilliertem Methylmethacrylat wird auf 60 °C erwärmt und kräftig gerührt. Danach wird eine Lösung von 1,16 g Kaliumperoxodisulfat in 40 ml Wasser zugegeben. Die Viskosität der Lösung steigt merklich an. Im Abstand von 10 Min werden kleine Proben entnommen und unter dem Interferenzkontrastmikroskop beobachtet. Eine Agglomeration der Pigmentteilchen ist nicht zu beobachten. Nach etwa einer Stunde wird mit 700 ml Wasser verdünnt.

Man erhält ein stabiles Latexsystem, welches sich problemlos mit verschiedenen Acrylat- und Methacrylatwasserlacksystemen auf Latexbasis mischen läßt.

Analog erhält man gut bis sehr gut mit den genannten Wasserlacksystemen verträgliche Latexsysteme mit den nach 1A, 1B und 1C modifizierten Pigmenten Iriodin® 504 und Iriodin® 225.

### Beispiel 3

Analog Beispiel 2 werden 40 g des nach Beispiel 1B (LICA 38 J) beschichteten Iriodin® 504 mit 40 g Polystyrol umhüllt.

Vor der Zugabe von Styrol wird die Reaktionssuspension noch mit 50 mg Natriumdihydrogenphosphat versetzt, da Styrol am besten in schwach alkalischem Medium polymerisiert. Es wird insgesamt 6 h bei 60 °C kräftig gerührt. Man erhält ein stabiles und mit anderen Latexsystemen auf Styrolbasis sehr gut verträgliches Latexsystem.

Analog werden polystyrolumhüllte modifizierte Pigmente mit den nach 1A, 1B und 1C beschichteten Pigmente hergestellt, die sich als stabile Latices ebenfalls gut bis sehr gut mit vergleichbaren Wasserlacksystemen mischen lassen.

### Beispiel 4

10 g des nach 1C beschichteten (Cavco Mod M 1) Iriodin® 504 werden in 50 ml Wasser suspendiert. Anschließend wird eine Lösung von 0,5 g Natriumdodecylsulfat in 20 ml Wasser zugegeben und danach zur Pufferung 125 mg (0,32 mmol) Eisen(II)ammoniumsulfat und 125 mg Natriumpyrophosphat in 5 ml Wasser. Die Pufferlösung wurde zuvor etwa 15 Min auf 60-70 °C erwärmt. Man läßt auf Raumtemperatur abkühlen und gibt 20 ml (0,2 mol) unter Stickstoff destilliertes Isopren dazu und nach 15 Min. kräftigem Rühren 50 mg (0,21 mmol) Kaliumperoxodisulfat Es wird etwa 6 h bei Raumtemperatur gerührt. Man erhält ein mit vergleichbaren Latices gut verträgliches Latexsystem.

Analog werden mit nach 1A, 1B und 1C beschichteten Pigmenten ebenfalls gut verträgliche Latexsysteme erhalten.

### Beispiel 5

Zu einer Lösung von 0,56 g SDS in 260 ml Wasser werden bei Raumtemperatur 30 g des mit 1,3 % Al(OH)SO₄ und 2,3 % DYNASILAN® MEMO beschichteten Pigments Iriodin® 225 gegeben. Anschließend wird auf 60 °C erwärmt. Nach der tropfenweisen Zugabe von 3,2 ml Methylmethacrylat wird eine Lösung von 0,45 g Kaliumperoxodisulfat in 10 ml Wasser zugegeben und das Gemisch 90 Minuten bei 60 °C gerührt. Danach wird auf Raumtemperatur abgekühlt, das Restmonomer im Vakuum entfernt, das Produkt filtriert, mit Wasser gewaschen und bei 120 °C getrocknet. Man erhält ein weiches, leicht staubendes polymerumhülltes Pigment mit sehr langsamem Absitzverhalten in Wasser, Aceton, Ethanol und Toluol. Der Polymergehalt beträgt etwa 1,65 Gew. %.

### Beispiel 6

Es wird analog Beispiel 5 gearbeitet, jedoch mit nur 0,09 g Kaliumperoxodisulfat. Der Polymergehalt beträgt etwa 0,5 Gew. %.

### Beispiel 7

Es wird analog Beispiel 6 gearbeitet, jedoch werden vor der Monomerzugabe 2 ml Silikonöl (MEK Art. 7742) zugesetzt. Der Polymergehalt beträgt etwa 3,65 Gew. %.

### Beispiel 8

Es wird analog Beispiel 6 gearbeitet, jedoch mit 0,93 g Natriumoleat als Emulgator. Der Polymergehalt beträgt etwa 1,55 Gew. %.

### Beispiel 9

Es wird analog Beispiel 6 gearbeitet, jedoch mit 0,56 g des nichtionischen Tensids Tween 20 als Emulgator. Der Polymergehalt beträgt etwa 1,16 Gew. %.

### Beispiel 10

Es wird analog Beispiel 5 gearbeitet, jedoch mit 0,93 g Natriumoleat als Emulgator. Der Polymergehalt beträgt etwa 2,12 Gew. %.

## Patentansprüche

1. Polymerumhüllte plättchenförmige Substrate, wobei die Substrate Schichtsilikate, plättchenförmiges Eisenoxid, Wismutoxychlorid, Perlglanzpigmente, Metallplättchen oder oxidbeschichtete Aluminiumplättchen sind, die gegebenenfalls auch mit organischen Farbstoffen bzw. Pigmenten beschichtet sein können, welche erhältlich sind durch
(i) Aufbringen ein oder mehrerer organischer Kupplungsreagenzien auf das plättchenförmige Substrat, wobei die Kupplungsreagenzien ein oder mehrere Metallzentren enthalten, an die funktionelle organische Gruppen gebunden sind, zur Hydrophobierung des plättchenförmigen Substrates,
(ii) Suspendieren des erhaltenen oberflächenmodifizierten Substrates in einem wäßrigen Medium unter Zugabe eines oder mehrerer Emulgatoren, wodurch micellenähnliche Strukturen gebildet werden, die die plättchenförmigen Substrate umschließen,
(iii) Zugabe eines polymerisierbaren Monomersystems und gegebenenfalls eines Initiators mit nachfolgender Polymerisation, und
(iv) Abfiltrieren, Waschen und Trocknen.

2. Latexsystem, enthaltend polymerumhüllte plättchenförmige Substrate, wobei die Substrate Schichtsilikate, plättchenförmiges Eisenoxid, Wismutoxychlorid, Perlglanzpigmente, Metallplättchen oder oxidbeschichtete Aluminiumplättchen sind, die gegebenenfalls auch mit organischen Farbstoffen bzw. Pigmenten beschichtet sind, welche erhältlich sind durch
(i) Aufbringen ein oder mehrerer organischer Kupplungsreagenzien auf das plättchenförmige Substrat, wobei die Kupplungsreagenzien ein oder mehrere Metallzentren enthalten, an die funktionelle organische Gruppen gebunden sind, zur Hydrophobierung des plättchenförmigen Substrates,
(ii) Suspendieren des erhaltenen oberflächenmodifizierten Substrates in einem wäßrigen Medium unter Zugabe eines oder mehrerer Emulgatoren, wodurch micellenähnliche Strukturen gebildet werden, die die plättchenförmigen Substrate umschließen, und
(iii) Zugabe eines polymerisierbaren Monomersystems und gegebenenfalls eines Initiators mit nachfolgender Polymerisation.

3. Verwendung von polymerumhüllten plättchenförmigen Substraten nach Anspruch 1 oder Latexsystemen nach Anspruch 2 in Formulierungen wie Lacken, Kunststoffen, Kosmetika oder Farbstoffen.

4. Formulierungen wie Lacke, Kunststoffe, Farbstoffen oder Kosmetika, enthaltend plättchenförmige Substrate nach Anspruch 1 oder Latexsysteme nach Anspruch 2.

5. Verfahren zur Herstellung plättchenförmiger Substrate, dadurch gekennzeichnet, daß die plättchenförmigen Substrate, welche ausgewählt werden aus einer Gruppe von Substratmaterialien, welche Schichtsilikate, plättchenförmiges Eisenoxid, Wismutoxychlorid, Perlglanzpigmente, Metallplättchen und oxidbeschichtete Aluminiumplättchen umfaßt, die gegebenenfalls auch mit organischen Farbstoffen oder Pigmenten beschichtet sein können,zunächst durch Aufbringen eines oder mehrerer organischer Kupplungsreagenzien auf das plättchenförmige Substrat hydrophobiert werden, wobei die Kupplungsreagenzien ein oder mehrere Metallzentren enthalten, an die funktionelle organische Gruppen gebunden sind, daß das so erhaltene oberflächenmodifizierte Substrat dann in einem wäßrigen Medium unter Zugabe eines oder mehrerer Emulgatoren suspendiert wird, wodurch micellähnliche Strukturen gebildet werden, die die plättchenförmigen Substrate umschließen, daß dann ein polymerisierbares Monomersystem und gegebenenfalls ein Initiator zugegeben wird mit nachfolgender Polymerisation, und daß die polymerumhüllten plättchenförmigen Substrate anschließend gegebenenfalls abfiltriert, gewaschen und getrocknet werden.

## Claims

1. Polymer-enveloped plateletlike substrates, the substrates being phyllosilicates, plateletlike iron oxide, bismuth oxychloride, pearl lustre pigments, metal flakes or oxide-coated aluminium flakes, which may also, if desired, be coated with organic dyes and/or pigments, which substrates are obtainable by
(i) applying one or more organic coupling reagents to the plateletlike substrate, the coupling reagents containing one or more metal centres to which functional organic groups are attached, in order to render the plateletlike substrate hydrophobic,
(ii) suspending the resulting surface-modified substrate in an aqueous medium with the addition of one or more emulsifiers, to form micelle-like structures which surround the plateletlike substrates,
(iii) adding a polymerizable monomer system and, if desired, an initiator, with subsequent polymerization, and
(iv) filtering off, washing and drying.

2. Latex system comprising polymer-enveloped plateletlike substrates, the substrates being phyllosilicates, plateletlike iron oxide, bismuth oxychloride, pearl lustre pigments, metal flakes or oxide-coated aluminium flakes, which may also, if desired, be coated with organic dyes and/or pigments, which substrates are obtainable by
(i) applying one or more organic coupling reagents to the plateletlike substrate, the coupling reagents containing one or more metal centres to which functional organic groups are attached, in order to render the plateletlike substrate hydrophobic,
(ii) suspending the resulting surface-modified substrate in an aqueous medium with the addition of one or more emulsifiers, to form micelle-like structures which surround the plateletlike substrates, and
(iii) adding a polymerizable monomer system and, if desired, an initiator, with subsequent polymerization.

3. Use of polymer-enveloped plateletlike substrates according to Claim 1 or latex systems according to Claim 2 in formulations such as coating materials, plastics, cosmetics or dyes.

4. Formulations such as coating materials, plastics, dyes or cosmetics, comprising plateletlike substrates according to Claim 1 or latex systems according to Claim 2.

5. Process for the preparation of plateletlike substrates, characterized in that the plateletlike substrates, which are selected from a group of substrate materials consisting of phyllosilicates, plateletlike iron oxide, bismuth oxychloride, pearl lustre pigments, metal flakes and oxide-coated aluminium flakes, which may also, if desired, be coated with organic dyes or pigments, are first of all rendered hydrophobic by applying one or more organic coupling reagents to the plateletlike substrate, the coupling reagents containing one or more metal centres to which functional organic groups are attached, in that the resulting surface-modified substrate is then suspended in an aqueous medium with the addition of one or more emulsifiers to form micelle-like structures which surround the plateletlike substrates, in that then a polymerizable monomer system and, if desired, an initiator is added, with subsequent polymerization, and in that the polymer-enveloped plateletlike substrates are subsequently, if desired, filtered off, washed and dried.

## Revendications

1. Substrats lamellaires enrobés d'un polymère, les substrats étant des silicates en couche, de l'oxyde de fer lamellaire, de l'oxychlorure de bismuth, des pigments nacrés, des lamelles métalliques ou des lamelles d'aluminium enduites d'un oxyde, qui éventuellement peuvent aussi être enduits de colorants ou de pigments organiques, que l'on peut obtenir
**(i)** par application d'un ou plusieurs réactifs de couplage organique sur le substrat lamellaire, les réactifs de couplage contenant un ou plusieurs centres métalliques auxquels sont fixés des groupes organiques fonctionnels, pour hydrophobiser le substrat lamellaire,
**(ii)** mise en suspension du substrat obtenu, modifié en surface, dans un milieu aqueux avec addition d'un ou plusieurs émulsifiants, ce qui forme des structures de type micellaire qui entourent les substrats lamellaires,
**(iii)** addition d'un système de monomères polymérisables et éventuellement d'un amorceur, puis polymérisation, et
**(iv)** isolement par filtration, lavage et séchage.

2. Système de latex, contenant des substrats lamellaires enrobés d'un polymère, les substrats étant des silicates en couche, de l'oxyde de fer lamellaire, de l'oxychlorure de bismuth, des pigments nacrés, des lamelles métalliques ou des lamelles d'aluminium enduites d'un oxyde, qui éventuellement peuvent aussi être enduits de colorants ou de pigments organiques, que l'on peut obtenir
**(i)** par application d'un ou plusieurs réactifs de couplage organique sur le substrat lamellaire, les réactifs de couplage contenant un ou plusieurs centres métalliques auxquels sont fixés des groupes organiques fonctionnels, pour hydrophobiser le substrat lamellaire,
**(ii)** mise en suspension du substrat obtenu, modifié en surface, dans un milieu aqueux avec addition d'un ou plusieurs émulsifiants, ce qui forme des structures de type micellaire qui entourent les substrats lamellaires,
**(iii)** addition d'un système de monomères polymérisables et éventuellement d'un amorceur, puis polymérisation.

3. Utilisation de substrats lamellaires enrobés d'un polymère selon la revendication 1, ou de systèmes de latex selon la revendication 2 dans des formulations telles que des peintures et vernis, des plastiques, des produits cosmétiques ou des colorants.

4. Formulations telles que des peintures et vernis, plastiques, colorants ou produits cosmétiques, contenant des substrats lamellaires selon la revendication 1 ou des systèmes de latex selon la revendication 2.

5. Procédé pour fabriquer des substrats lamellaires, caractérisé en ce que les substrats lamellaires, qui sont choisis parmi l'ensemble comprenant les matériaux de substrat comprenant les silicates en couche, l'oxyde de fer lamellaire, l'oxychlorure de bismuth, les pigments nacrés, les lamelles métalliques et les lamelles d'aluminium enduites d'un oxyde, qui éventuellement peuvent être aussi enduits de colorants ou de pigments organiques, sont d'abord hydrophobisées par application d'un ou plusieurs réactifs de couplage organiques sur le substrat lamellaire, les réactifs de couplage contenant un ou plusieurs centres métalliques, auxquels sont fixés des groupes organiques fonctionnels ; que le substrat ainsi obtenu, modifié en surface, est ensuite mis en suspension dans un milieu aqueux, avec addition d'un ou plusieurs émulsifiants, ce qui forme des structures micellaires qui entourent les substrats lamellaires ; que l'on ajoute ensuite un système de monomères polymérisables et éventuellement un amorceur, avant de procéder à une polymérisation ; et que les substrats lamellaires enrobés d'un polymère sont ensuite éventuellement isolés par filtration, lavés et séchés.
